# EUROPEAN PATENT APPLICATION

(11) **EP 4 848 095 A1**
(43) Date of publication of application: **02.12.2026**
(21) Application number: 25219250.5
(22) Date of filing: 28.11.2025
(51) Int. Cl.: G06F 12/0862, G06F 12/121, G06N 3/044

(54) **DEVICE, SYSTEM AND METHOD TO CONTROL UTILIZATION OF A CACHE WITH A MACHINE LEARNING ENGINE**

(30) Priority: 30.05.2025 US 202519223929
(71) Applicant: INTEL Corporation, Santa Clara, CA 95054 (US)
(72) Inventor: Kumar, Ashwani, 560087 Bangalore (IN)
(74) Representative: Samson & Partner Patentanwälte mbB

(57) **Abstract**

Techniques and mechanisms for determining a utilization of a cache based on a prediction which is generated with an inference engine. In an embodiment, telemetry describing accesses to a given cache line is prepared for operations by a machine learning (ML) engine of a processor. The ML engine comprises a systolic array, processor elements of which are configured to perform respective fixed-point calculations based on the telemetry. Based on such fixed-point calculations, the ML engine generates a value which represents a likelihood of a predicted reuse of the cache line. The value is provided as a basis for identifying a cache utilization action to be implemented with a cache controller. In another embodiment, the cache utilization action includes a cache line (de)allocation, a cache prefetch or a cache line replacement.

## Description

### BACKGROUND

### 1. Technical Field

This disclosure generally relates to cache control mechanisms and more particularly, but not exclusively, to a use of machine learning for determining a utilization of one or more caches.

### 2. Background Art

Advances in semiconductor processing and logic design have permitted an increase in the amount of logic that may be present on integrated circuit devices. As a result, computer system configurations have evolved from a single or multiple integrated circuits in a system to multiple cores, multiple hardware threads, and multiple logical processors present on individual integrated circuits. A processor or integrated circuit typically comprises a single physical processor die, where the processor die may include any number of cores, hardware threads, or logical processors. The ever increasing number of processing elements - cores, hardware threads, and logical processors - on integrated circuits enables more tasks to be accomplished in parallel. However, the execution of more threads and tasks put an increased premium on shared resources, such as memory, and the management thereof.

Typically, cache memory includes a memory between a shared system memory and execution units of a processor to hold information in a closer proximity to the execution units. In addition, cache is typically smaller in size than a main system memory, which allows for the cache to be constructed from expensive, faster memory, such as Static Random Access Memory (SRAM). Both the proximity to the execution units and the speed allow for caches to provide faster access to data and instructions. Caches are often identified based on their proximity from execution units of a processor. For example, a first-level (L1) cache is one which is relatively close to execution units residing on the same physical processor. Due to the proximity and placement, first level cache is often the smallest and quickest cache. A computer system may also hold higher-level or further out caches, such as a second level (L2) cache, which also resides on the processor, but is placed between the first level cache and main memory. Often, a third level (L3) cache is placed on the processor or elsewhere in the computer system, such as at a controller hub, between the second level cache and main memory.

Caches provide significantly faster access to data and instructions than memory or hard disk. Consequently, it is desirable to store data that is frequently accessed in caches in order to minimize the number of times the system has access memory or hard disk. Thus, there is a need for ways to efficiently manage the utilization of caches.

### BRIEF DESCRIPTION OF THE DRAWINGS

The various embodiments of the present invention are illustrated by way of example, and not by way of limitation, in the figures of the accompanying drawings and in which:
FIG. 1 shows features of a system to perform a predictive analytics operation as a basis for determining a utilization of a cache according to an embodiment.
FIG. 2 shows a flow diagram illustrating features of a method to determine a predicted utilization of a cache line according to an embodiment.
FIG. 3 shows a block diagram illustrating features of a device to control a cache based on a predicted likelihood that a cache line will be reused according to an embodiment.
FIG. 4 shows a block diagram illustrating features of a systolic array to calculate a likelihood of use of a cache line according to an embodiment.
FIGs. 5A-5C show block diagrams illustrating features of respective processor elements each to facilitate calculation of a reuse likelihood value according to a corresponding embodiment.
FIG. 6 shows a block diagram illustrating features of a device to control a cache based on a reuse likelihood value according to an embodiment.
FIG. 7 shows a flow diagram illustrating features of a method to determine an operation of a cache controller with a ML engine according to an embodiment.
FIG. 8 illustrates an exemplary system.
FIG. 9 illustrates a block diagram of an example processor that may have more than one core and an integrated memory controller.
FIG. 10A is a block diagram illustrating both an exemplary in-order pipeline and an exemplary register renaming, out-of-order issue/execution pipeline according to examples.
FIG. 10B is a block diagram illustrating both an exemplary example of an in-order architecture core and an exemplary register renaming, out-of-order issue/execution architecture core to be included in a processor according to examples.
FIG. 11 illustrates examples of execution unit(s) circuitry.
FIG. 12 is a block diagram of a register architecture according to some examples.

### DETAILED DESCRIPTION

Embodiments discussed herein variously provide techniques and mechanisms for determining a utilization of a cache based on a prediction which is generated with a machine learning (ML) inference engine. The description herein includes numerous details to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of" or "one or more of" can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including an ML engine which is configured to support a cache controller functionality.

Conventional cache management approaches - such as least recently used (LRU) line replacement or least frequently used (LFU) line replacement - are reactive and tend to struggle with performance bottlenecks caused by unpredictable workloads. These static methods tend to have a limited ability to adapt dynamically to evolving workloads, leading to inefficiencies in performance, power consumption, and thermal management.

To avoid or otherwise mitigate such limitations, some embodiments variously provide predictive analytics functionality - e.g., with inference engine circuitry such as that of a machine learning (ML) engine - in support of operations by a cache controller. In various embodiments, cache controller circuitry includes, is coupled to access, or is otherwise configured to operate based on, inference engine circuitry which enables the cache controller to dynamically allocate and/or otherwise utilize cache resources based on a prediction of a future cache access. By integrating real-time telemetry collection and machine learning functionality, some embodiments variously enable proactive cache control operations which, for example, reduce cache misses and/or otherwise improve the efficiency of cache utilization.

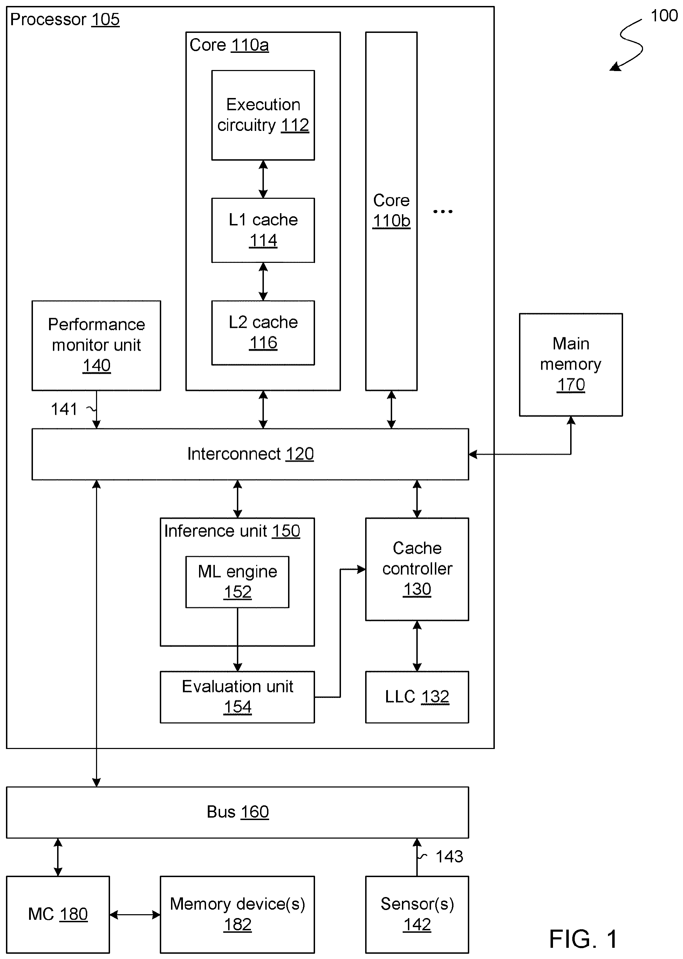

FIG. 1 shows features of a system 100 for performing a predictive analytics operation to determine a utilization of a cache according to an embodiment. System 100 is one example of an embodiment wherein circuitry provides machine learning (ML) functionality for efficiently determining a likelihood that a given cache line will be subsequently reused (e.g., read, written and/or otherwise accessed). In an embodiment, a value (referred to herein as a "reuse likelihood score") is provided as a basis for identifying a subsequent utilization of one or more caches.

As shown in FIG. 1, system 100 comprises a processor 105 which (for example) is coupled to one or more resources that, in the example embodiment shown, include a main memory 170, a bus 160, a memory controller (MC) 180, one or more memory devices 182, and one or more sensors 142. In an embodiment, processor 105 is a multicore processor including one or more cores, such as the illustrative cores 110a, 110b, ... (generically core 110) shown. Although described herein with reference to providing predictive analytics functionality with a multicore processor, some embodiments are not limited in this regard, and such embodiments apply equally to single core processors, as well as to any of a various state machines and/or other circuit components which are operable to access a cache memory. In general, each core of the processor includes execution circuitry 112 which (for example) generally takes the form of a processor pipeline including a plurality of stages including one or more front end units, one or more execution units, and one or more backend units. In different implementations, processor 105 is an in-order processor or, alternatively, an out-of-order processor.

A given core 110 supports one or more instructions sets such as the x86 instruction set (with some extensions that have been added with newer versions); the MIPS instruction set of MIPS Technologies of Sunnyvale, Calif.; the ARM instruction set (with optional additional extensions such as NEON) of ARM Holdings of Sunnyvale, Calif., a RISC-V instruction set, or the like. It should be understood that, in some embodiments, a core 110 supports multithreading - i.e., executing two or more parallel sets of operations or threads - and (for example) does so in any of a variety of ways including time sliced multithreading, simultaneous multithreading (where a single physical core provides a logical core for each of the threads that physical core is simultaneously multithreading), or a combination thereof (e.g., time sliced fetching and decoding combined with simultaneous multithreading thereafter such as in the Intel^{®} Hyperthreading technology).

In one example embodiment, processor 105 is a general-purpose processor, such as one adapted from a Core^{™} i3, i5, i7, 2 Duo and Quad, Xeon^{™}, Itanium^{™}, XScale^{™} or StrongARM^{™} processor, which are available from Intel Corporation, of Santa Clara, Calif. Alternatively, circuitry of processor 105 is adapted from a processor of another company, such as ARM Holdings, Ltd, MIPS, etc. In other embodiments, processor 105 is a special-purpose processor, such as, for example, a network or communication processor, compression engine, graphics processor, co-processor, embedded processor, or the like. In various embodiments, processor 105 is implemented on one or more chips. Alternatively, or in addition, processor 105 is a part of and/or implemented on one or more substrates using any of a number of process technologies, such as, for example, BiCMOS, CMOS, or NMOS. In some embodiments, a system on a chip (SoC) includes processor 105.

In general, execution circuitry 112 of core 110a operates to fetch instructions, decode the instructions, execute the instructions and retire the instructions. In one such embodiment, some of these instructions - e.g., including user-level instructions or privileged level instructions - are encoded to allocate data or instructions into a cache, and/or to access the cache to read said data or instructions.

Processor 105 comprises one or more levels of cache - e.g., wherein some or all of cores 110a, 110b,... each include a respective one or more cache levels, and (for example) wherein one or more caches of processor 105 are shared by various ones of cores 110a, 110b,.... In the illustrative embodiment shown, core 110a comprises a lowest level (L1) cache 114, and a next higher level of cache, namely a level 2 (L2) cache 116 which is coupled to L1 cache 114. Some or all of cores 110a, 110b,... are each coupled to a shared last level cache (LLC) 132 and - for example - other uncore circuitry, which can include various components of a processor such as power control circuitry, memory controller circuitry, interfaces to off-chip components and the like. Such coupling is provided with any of various suitable connectivity structures, such as the illustrative interconnect 120 shown. Although shown at this high level in the embodiment of FIG. 1, it is to be understood that the scope of some embodiments is not limited in this regard.

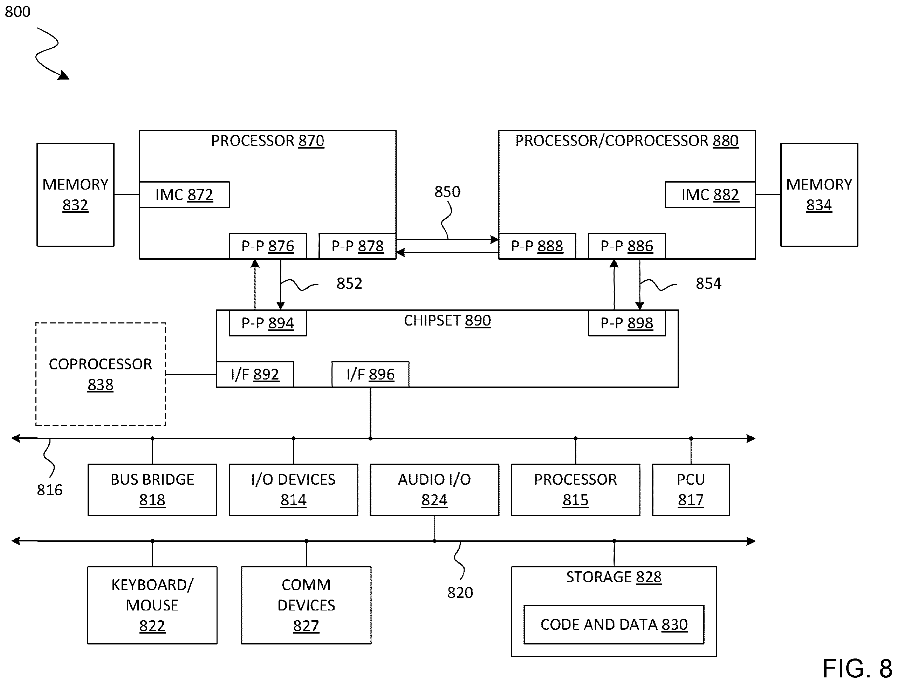

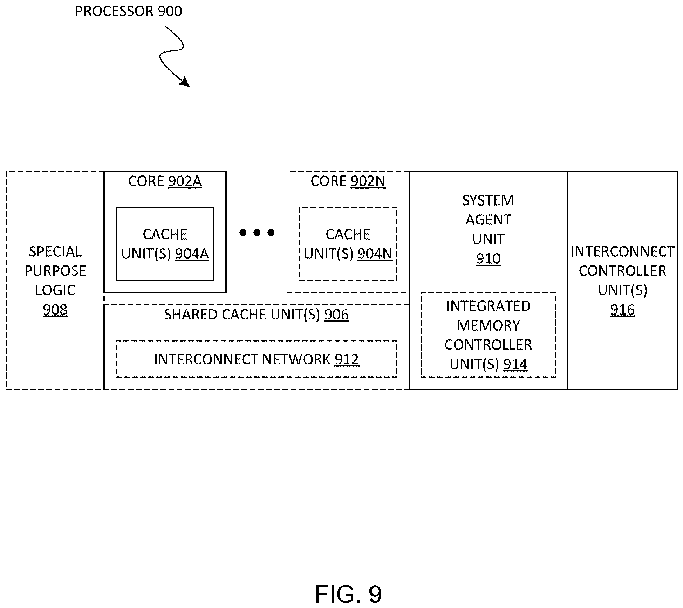

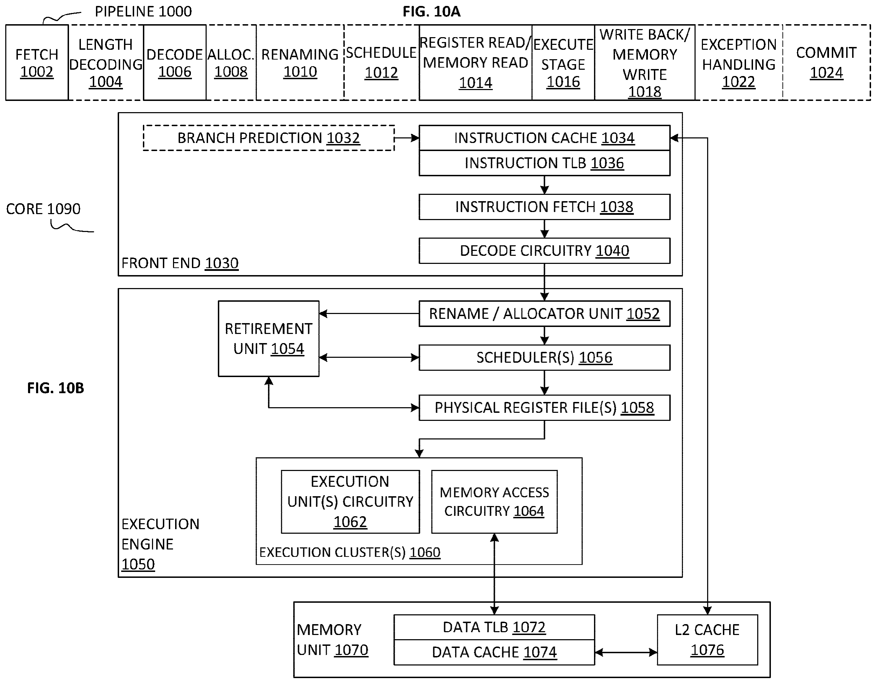

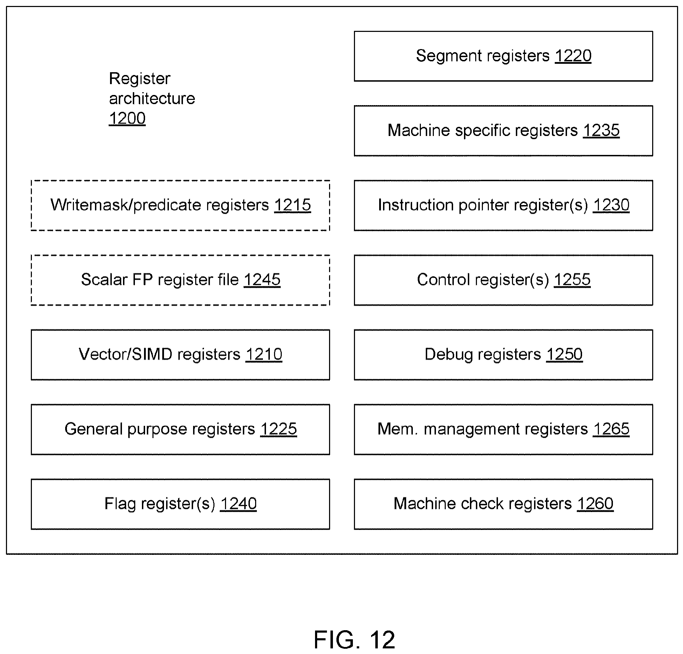

In some embodiments, circuitry of system 100 is adapted from, and/or is incorporated with, any of various suitable processor architectures. By way of illustration and not limitation, any of various suitable embodiments of system 100 are implemented, for example, in the processor 870 (FIG. 8), the processor/coprocessor 880 (FIG. 8), the processor 900 (FIG. 9), the pipeline 1000 (FIG. 10A), the core 1090 (FIG. 10B), and/or the register architecture 1200 (FIG. 12).

As seen in FIG. 1, cores 110a, 110b,... are variously coupled to a cache controller 130 which, for example, comprises circuit logic to control storage and retrieval operations with regard to cache circuitry. For example, cache controller 130 illustrates any of a variety of one or more of microcontrollers, application-specific integrated circuits (ASICs), state machines, programmable gate arrays, mode registers, fuses, and/or other suitable circuit resources which are configured to control operation of one or more caches including, for example, L1 cache 114, L2 cache 116 and/or LLC 132.

In various embodiments, cache controller 130 provides functionality to proactively perform any of various operations (referred to herein as "cache utilization actions") based on information which is generated with a predictive analytics resource of processor 105. By way of illustration and not limitation, a cache utilization action includes a cache (de)allocation action which changes a state of allocation of one or more cache lines to a particular software process which is executed with processor 105, and/or to a particular hardware resource of processor 105. Alternatively or in addition, a cache utilization action includes a prefetch action which prefetches one or more lines to a given cache. Alternatively or in addition, a cache utilization action includes a cache replacement action which evicts one or more lines of a cache - e.g., to facilitate one or more other lines being (pre)fetched to said cache.

To facilitate proactive identification (and, for example, proactive performance) of a cache utilization action, processor 105 further comprises an inference unit 150 which performs calculations to determine a reuse likelihood score for a given cache line. In an embodiment, a machine learning (ML) engine 152 of inference unit 150 performs fixed point calculations, based on telemetry information for said given cache line, to determine such a reuse likelihood score. In one such embodiment, ML engine 152 comprises a systolic array of elements (variously referred to herein as "processor elements" or "cells") which are configured to predict a likelihood that a given cache line will be subsequently accessed. By way of illustration and not limitation, ML engine 152 calculates a reuse likelihood score based on telemetry information which is provided to inference unit 150 by cache controller 130, based on telemetry information in a signal 143 from sensor(s) 142, based on a telemetry signal 141 from performance monitor unit 140, and/or the like.

In various embodiments, an evaluation unit 154 of processor 105 is coupled to receive, from inference unit 150, prediction information which comprises a reuse likelihood score and, for example, an identifier of a cache line which corresponds to said reuse likelihood score. Based on such prediction information, evaluation unit 154 proposes or otherwise identifies to cache controller 130 one or more possible cache utilization actions to be performed. Responsive to the identified cache utilization action(s), cache controller 130 generates one or more control signals to operate L1 cache 114, L2 cache 116, LLC 132 and/or any of various other caches of processor 105.

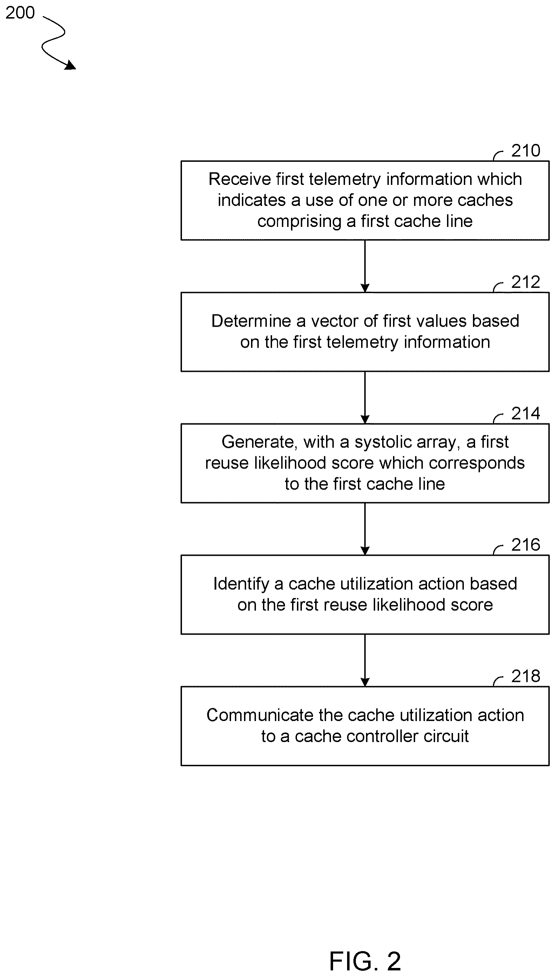

FIG. 2 shows a method 200 for determining a predicted utilization of a cache line according to an embodiment. Method 200 illustrates one example of an embodiment wherein a ML engine is operated to provide a value which is to be a basis for controlling access to one or more caches, wherein the value indicates a likelihood that a given cache line will be reused. Operations such as those of method 200 are performed with any of various combinations of suitable hardware (e.g., circuitry), firmware and/or executing software which, for example, provide some or all of the functionality of processor 105.

As shown in FIG. 2, method 200 comprises (at 210) receiving first telemetry information which indicates a use of one or more caches comprising a first cache line. For example, the receiving at 210 comprises inference unit 150 receiving - from cache controller 130, performance monitor unit 140 and/or sensor(s) 142 - telemetry which describes one or more characteristics of accesses to a cache line of L1 cache 114, L2 cache 116, or LLC 132.

Based on the first telemetry information at 210, method 200 (at 212) determines a vector of first values. For example, the determining at 212 comprises inference unit 150 encoding, (re)formatting or otherwise preparing some or all of the first telemetry to be provided to ML engine 152 (or other suitable inference engine circuitry). In one such embodiment, the determining of the vector at 212 comprises determining an array of values that are to be provided to a systolic array. By way of illustration and not limitation, some or all of the first values each include, or are otherwise based on, a different respective time stamp for a corresponding access to the first cache line.

Method 200 further comprises (at 214) generating, with a systolic array (of ML engine 152, for example), a first reuse likelihood score which corresponds to the first cache line. In an embodiment, processor elements of the systolic array are configured each to perform a respective fixed-point calculation based on the first values and weight values which correspond to the first cache line. For example, one or more of the processor elements comprise any of various suitable types of recurrent neural network (RNN) cells, in various embodiments. In one such embodiment, some or all such processor elements comprise long short-term memory (LSTM) cells or, for example, gated recurrent unit (GRU) cells.

Based on the first reuse likelihood score at 214, method 200 (at 216) identifies a cache utilization action. For example, the identifying at 214 comprises evaluation unit 154 performing a look-up search, a calculation and/or other suitable operation to identify a cache allocation action, a cache eviction (e.g., replacement) action, a cache prefetch action and/or the like - e.g., wherein the first reuse likelihood score is a basis for such identification operation(s).

Method 200 further comprises (at 218) communicating the cache utilization action to a cache controller circuit - e.g., wherein said communicating comprises evaluation unit 154 proposing or otherwise specifying one or more cache utilization actions to cache controller 130. In an embodiment, communicating the cache utilization action at 218 comprises identifying to the cache controller circuit one of an allocation of one or more cache lines, or a deallocation of the one or more cache lines. In some embodiments, communicating the cache utilization action at 218 additionally or alternatively comprises identifying to the cache controller circuit one or more cache lines each as a respective candidate to be evicted from the one or more caches (e.g., wherein the one or more cache lines are identified based on a predictive least likely to be used eviction policy). In some embodiments, communicating the cache utilization action at 218 additionally or alternatively comprises identifying to the cache controller circuit one or more lines each as a respective candidate to be prefetched to the one or more caches.

In some embodiments, generating the first reuse likelihood score with the systolic array at 214 comprises successively generating multiple reuse likelihood scores each based on respective telemetry information. In one such embodiment, method 200 further comprises operations (not shown) to maintain a data structure - referred to herein as a "reuse likelihood table" or "RLT" - which identifies the multiple reuse likelihood scores each as corresponding to a different respective cache line. For example, maintaining such a table comprises storing, to an entry of the table, both the first reuse likelihood score and an identifier of the corresponding first cache line. In one such embodiment, method 200 further comprises performing a search of the table, wherein the cache utilization action is identified at 216 based on said search.

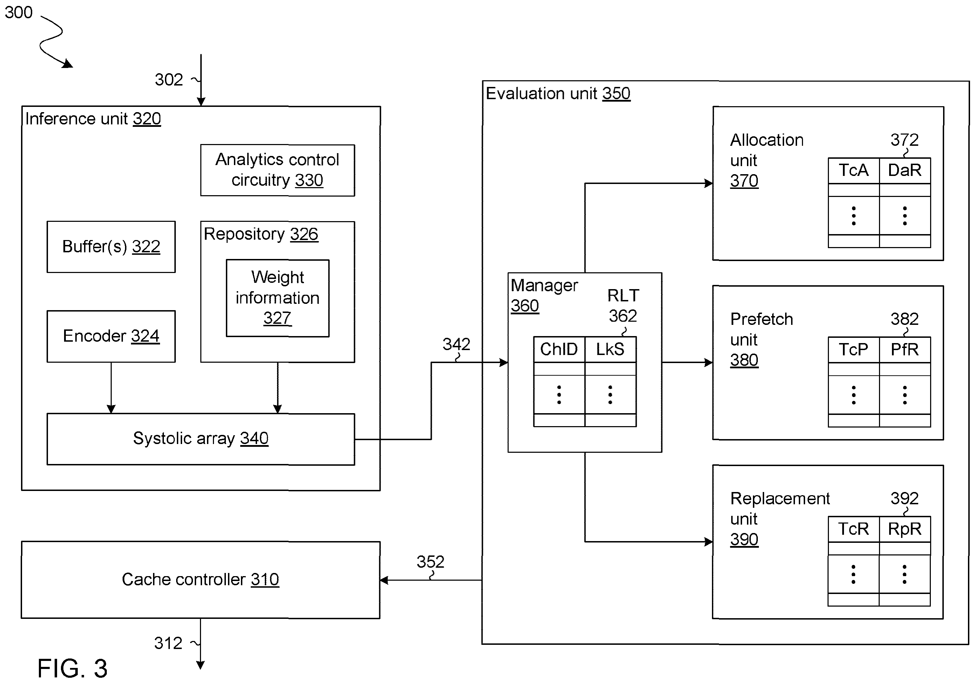

FIG. 3 shows a device 300 which controls a cache based on a predicted likelihood that a cache line will be reused according to an embodiment. Device 300 illustrates features of one example embodiment wherein a systolic array of processor elements is operated to generate a prediction regarding future use of a given cache line, wherein said prediction is to serve as a basis for controlling one or more caches. In some embodiments, device 300 provides functionality such as that of processor 105 - e.g., wherein operations of method 200 are performed with some or all of device 300.

As shown in FIG. 3, device 300 comprises a cache controller 310, an inference unit 320, and an evaluation unit 350 which - for example - provide functionality of cache controller 130, inference unit 150, and evaluation unit 154 (respectively). In one such embodiment, a systolic array 340 of inference unit 320 corresponds functionally to ML engine 152.

Inference unit 320 further comprises any of various circuit resources which are suitable to facilitate the performance of predictive analytics operations with systolic array 340. By way of illustration and not limitation, such circuit resources include some or all of the encoder 324, the analytics control circuitry 330, and the one or more telemetry buffers 322 shown. In one such embodiment, inference unit 320 includes, is coupled to access, or is otherwise configured to operate with a repository 326 of weight information 327 - e.g., wherein machine learning (ML) functionality is provided with inference unit 320 based on weight information 327 and telemetry information for one or more caches (not shown) which are controlled by cache controller 310.

By way of illustration and not limitation, telemetry buffer(s) 322 include a buffer to store telemetry information which, for example, is communicated to inference unit 320 via a one or more signals (such as the illustrative telemetry signal 302 shown). For example, such telemetry information is buffered in anticipation of being subsequently encoded, formatted or otherwise prepared for predictive analytics calculations. In an illustrative scenario according to one embodiment, encoder 324 debuffers and encodes telemetry information for use by systolic array 340 - e.g., wherein encoder 324 is to provide values of a telemetry vector each into a respective row, or each into a respective column, of processor element (not shown) of systolic array 340.

In some embodiments, telemetry buffer(s) 322 additionally or alternatively comprise a buffer which is available to store a tag, address and/or other suitable identifier of a particular cache line to which telemetry signal 302 corresponds - e.g., wherein information communicated via telemetry signal 302 identifies one or more characteristics of accesses to said cache line. Alternatively or in addition, telemetry buffer(s) 322 comprise a buffer which is available to store a reuse likelihood score which is generated with systolic array 340 - e.g., in anticipation of said reuse likelihood score being communicated from inference unit 320 to evaluation unit 350.

In various embodiments, analytics control circuitry 330 comprises one or more finite state machine circuits (and/or other suitable circuitry) which facilitate operations to efficiently generate, for each of one or more cache lines, a different respective reuse likelihood score based on telemetry information such as that communicated to inference unit 320 via telemetry signal 302. For example, such operations include coordinated collection, preparation and/or other provisioning of telemetry information. Alternatively or in addition, such operations include a selection of weight information 327 from repository 326 for provisioning to systolic array 340 - e.g., wherein said selection is based on a tag or other identifier of a particular cache line to which the telemetry in question corresponds. Alternatively or in addition, such operations include communication of a reuse likelihood score (e.g., with a corresponding cache line identifier) from inference unit 320 to evaluation unit 350.

In the example embodiment shown, inference unit 320 generates prediction information 342 which is communicated to evaluation unit 350. Prediction information 342 includes a reuse likelihood value (which is generated with systolic array 340) and, for example, an identifier of a cache line to which said reuse likelihood value corresponds. In an embodiment, prediction information 342 is provided to a manager 360 (or other suitable circuit resource) of evaluation unit 350. Manager 360 includes, is coupled to access, or otherwise operates with one or more data structures - such as the illustrative reuse likelihood table (RLT) 362 - which serve as a repository of various prediction information for respective cache lines.

In various embodiments, circuitry of manager 360 is configured to maintain RLT 362 - e.g., wherein manager 360 generates, updates and/or otherwise provides at RLT 362 one or more entries which are each to correspond to a different respective cache line. In the example embodiment shown, a given entry of RLT 362 is to comprise a respective identifier (ChID) of a corresponding cache line, and a respective reuse likelihood score (LkS) for said corresponding cache line. In one such embodiment, manager 360 facilitates a search and/or other evaluation of prediction information at RLT 362 - e.g., to facilitate the identification of a cache utilization action which is to be proposed or otherwise communicated to cache controller 310.

In the example embodiment shown, an allocation unit 370 of evaluation unit 350 is configured to determine a cache allocation action to be performed with cache controller 310 based on a reuse likelihood score which is generated with systolic array 340. For example, allocation unit 370 proposes or otherwise identifies an allocation of one or more cache lines to a particular software resource and/or a particular circuit resource - e.g., wherein allocation unit 370 proposes or asserts that such an allocation is to be initiated, changed, or terminated.

In an example embodiment, allocation unit 370 includes or is otherwise coupled to access reference information 372 which specifies or otherwise indicates one or more rules for initiating, updating, terminating an allocation of one or more cache lines. For example, reference information 372 comprises one or more entries, wherein a given one such entry is to identify a respective test condition (TcA) and a respective (de)allocation rule (DaR) as corresponding to said test condition TcA. In an illustrative scenario according to one embodiment, a given test condition TcA includes or is otherwise based on a threshold maximum level of cache line utilization which is to be deemed sufficient for increasing a number of allocated cache lines. Alternatively or in addition, such a given test condition TcA includes or is otherwise based on a threshold minimum level of utilization which is to be deemed sufficient for terminating or otherwise decreasing an allocation of one or more cache lines.

In an embodiment, allocation unit 370 communicates with manager 360 to identify or otherwise detect prediction information at RLT 362. Based on such prediction information, allocation unit 370 performs an evaluation to determine, based on reference information 372, whether a given test condition TcA is satisfied - e.g., wherein said test condition TcA includes or is otherwise based on a respective threshold level of (actual or expected) utilization for a given cache line. Based on the satisfaction of such a test condition TcA, allocation unit 370 determines, based on the corresponding (de)allocation rule DaR, a cache allocation action which is to be proposed or otherwise identified to cache controller 310.

In some embodiments, evaluation unit 350 additionally or alternatively comprises a prefetch unit 380 which is configured to determine a cache prefetch action to be performed with cache controller 310 based on a reuse likelihood score. For example, prefetch unit 380 proposes or otherwise identifies a prefetch of one or more lines to a cache (not shown) which is to be controlled with cache controller 310.

In an example embodiment, prefetch unit 380 includes or is otherwise coupled to access reference information 382 which specifies or otherwise indicates one or more rules for identifying one or more lines each as a candidate to be prefetched to a respective cache. For example, reference information 382 comprises one or more entries, wherein a given one such entry is to identify a respective test condition (TcP) and a respective prefetch rule (PfR) as corresponding to said test condition TcP. In an illustrative scenario according to one embodiment, a given test condition TcP includes or is otherwise based on a threshold maximum level of cache line utilization which is to be deemed sufficient for prefetching one or more additional lines.

In an embodiment, prefetch unit 380 communicates with manager 360 to identify or otherwise detect prediction information at RLT 362. Based on such prediction information, prefetch unit 380 performs an evaluation to determine, based on reference information 382, whether a given test condition TcP is satisfied - e.g., wherein said test condition TcP includes or is otherwise based on a respective threshold level of (actual or expected) utilization for a given cache line. Based on the satisfaction of such a test condition TcP, prefetch unit 380 determines, based on the corresponding prefetch rule PfR, a cache prefetch action which is to be proposed or otherwise identified to cache controller 310.

In some embodiments, evaluation unit 350 additionally or alternatively comprises a replacement unit 390 which is configured to determine a cache replacement action to be performed with cache controller 310 based on a reuse likelihood score. For example, replacement unit 390 proposes or otherwise identifies a replacement of one or more lines to a cache (not shown) which is to be controlled with cache controller 310.

In an example embodiment, replacement unit 390 includes or is otherwise coupled to access reference information 392 which specifies or otherwise indicates one or more rules for identifying one or more lines each as a candidate to be evicted from a respective cache. For example, reference information 392 comprises one or more entries, wherein a given one such entry is to identify a respective test condition (TcR) and a respective replacement rule (RpR) as corresponding to said test condition TcR. In an illustrative scenario according to one embodiment, a given test condition TcR includes or is otherwise based on a threshold minimum level of cache line utilization which is to be deemed sufficient for evicting one or more cache lines, which are to be replaced with one or more other lines.

In an embodiment, replacement unit 390 communicates with manager 360 to identify or otherwise detect prediction information at RLT 362. Based on such prediction information, replacement unit 390 performs an evaluation to determine, based on reference information 392, whether a given test condition TcR is satisfied - e.g., wherein said test condition TcR includes or is otherwise based on a respective threshold level of (actual or expected) utilization for a given cache line. Based on the satisfaction of such a test condition TcR, replacement unit 390 determines, based on the corresponding replace rule RpR, a cache replacement action which is to be proposed or otherwise identified to cache controller 310.

In various embodiments, a cache utilization action - e.g., identified by one of allocation unit 370, prefetch unit 380, or replacement unit 390 - is identified to cache controller 310 via utilization information 352 from evaluation unit 350. Based on utilization information 352, cache controller 310 generates one or more signals - e.g., including the illustrative control signal 312 shown - to control one or more caches (not shown) based on the identified cache utilization action.

In various embodiments, device 300 includes circuitry of inference unit 150 and, for example, cache controller 130. In some embodiments, circuitry of device 300 is adapted from, and/or is incorporated with, any of various suitable processor architectures. By way of illustration and not limitation, any of various suitable embodiments of device 300 are implemented, for example, in the processor 870 (FIG. 8), the processor/coprocessor 880 (FIG. 8), the processor 900 (FIG. 9), the pipeline 1000 (FIG. 10A), the core 1090 (FIG. 10B), and/or the register architecture 1200 (FIG. 12).

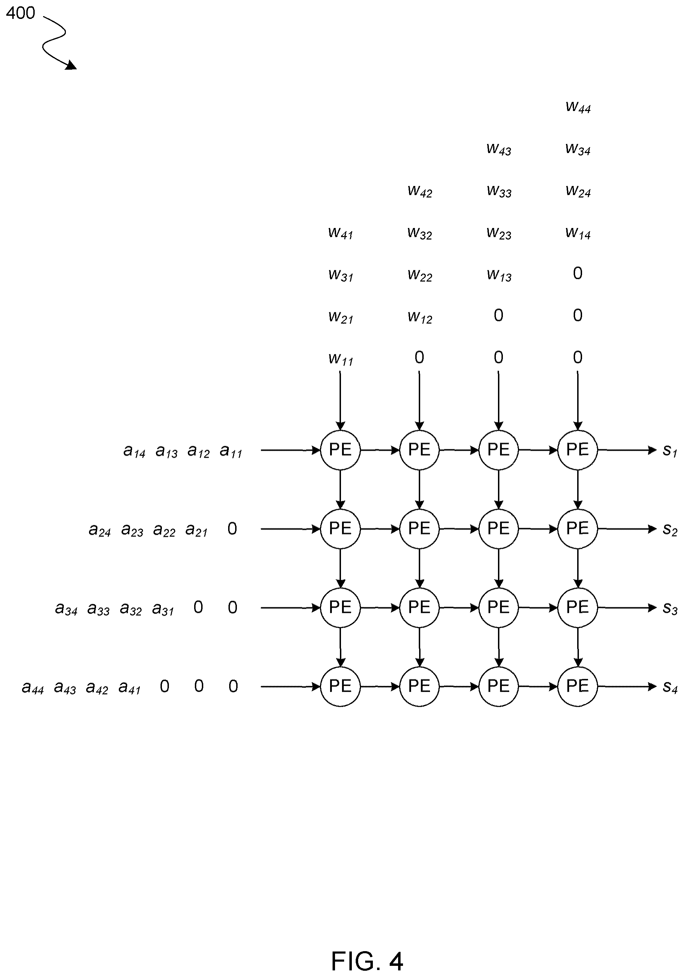

FIG. 4 shows a systolic array 400 for calculating a likelihood of use of a cache line according to an embodiment. In some embodiments, systolic array 400 provides functionality such as that of ML engine 152, or systolic array 340 - e.g., wherein operations of method 200 are performed with systolic array 400. For example, systolic array 400 is provided with a programmable logic device such as a field-programmable gate array (FPGA) or an application-specific integrated circuit (ASIC) that includes circuitry that is designed and/or programmed to facilitate calculation of a (re)use likelihood value.

As shown in FIG. 4, systolic array 400 comprises a two-dimensional (2D) arrangement of processor elements (PE) which are coupled to each other (e.g., the illustrative 4×4 array shown). In an illustrative scenario according to one embodiment, values {*a*_{xy}} of a telemetry vector are variously provided, as an input matrix A, into systolic array 400 along a first edge thereof (in this example, row-wise). In one such embodiment, values {*w*_{xy}} of a weight matrix W are variously provided - e.g., column-wise - along an orthogonal second edge of systolic array 400. For a given value *a*_{xy} of matrix A or a given value *w*_{xy} of weight matrix W, the subscript x indicates a row of systolic array 400, and the subscript y indicates a column of systolic array 400.

In an embodiment, PEs of systolic array 400 variously operate each to perform a respective fixed-point calculation based on corresponding values of the input matrix A and the weight matrix W. For example, a given PE of systolic array 400 supports a respective multiply-accumulate functionality to facilitate calculation of a reuse likelihood value. For example, rows of systolic array 400 provide outputs {*s*ₓ} which, for example, each include a respective one or more bits of a value which indicates, for a given cache line, a likelihood of a predicted use (e.g., access) of said cache line. In one such embodiment, each of outputs {*sₓ*} is a respective vector of an output array S.

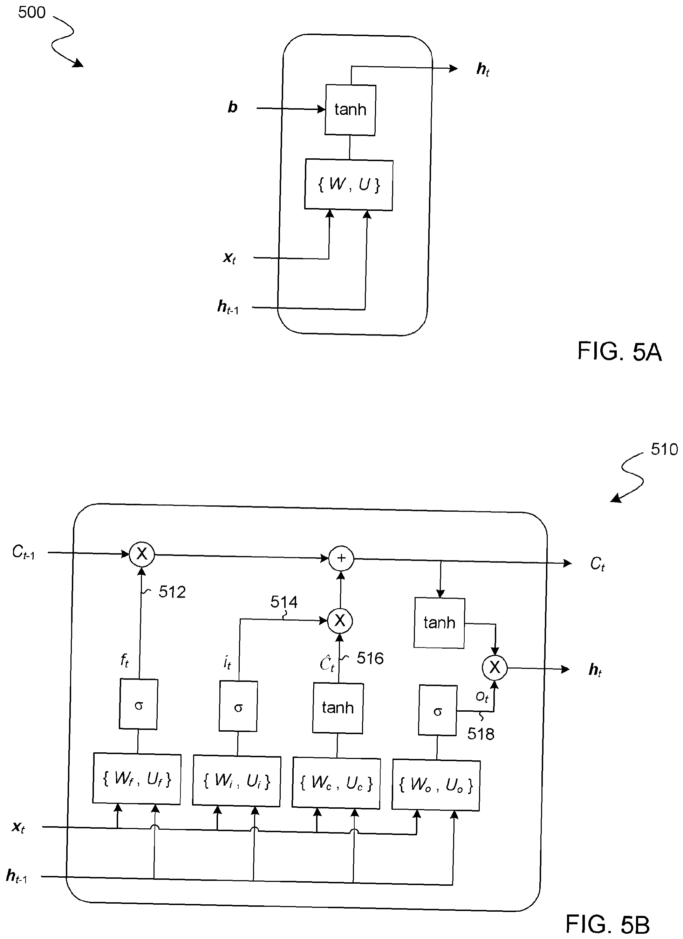

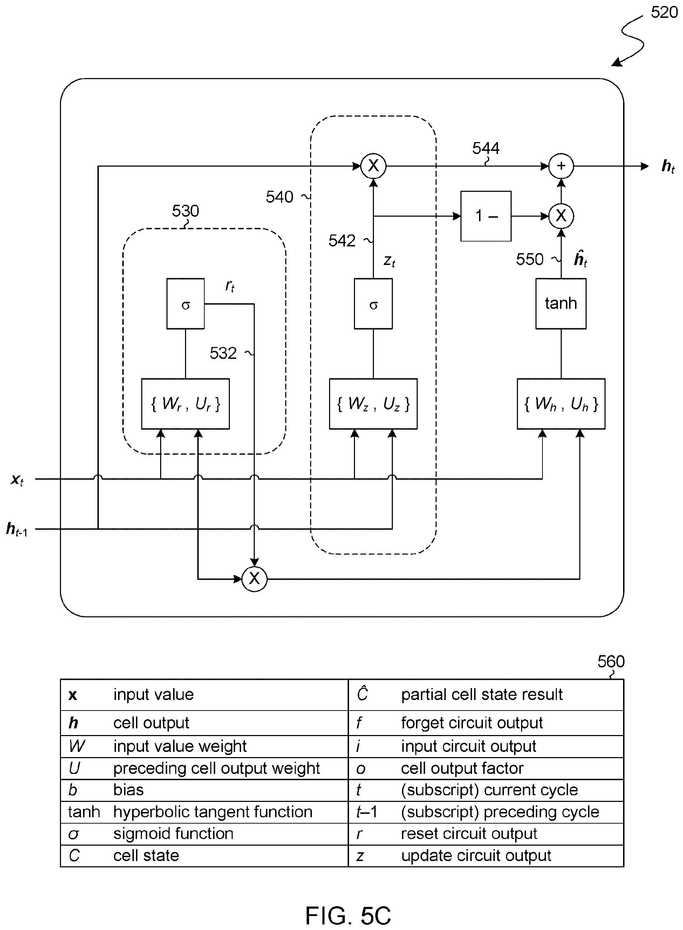

FIGs. 5A-5C show block diagrams illustrating features of respective processor elements 500, 510, 520 which each facilitate calculation of a reuse likelihood value according to a corresponding embodiment. In some embodiments, any of various suitable ML engine circuits (e.g., at ML engine 152, systolic array 340, or systolic array 400), which facilitate the calculation of a reuse likelihood value, comprise one of processor elements 500, 510, 520. FIG. 5C further shows a legend 560 of symbols used herein to describe respective calculation functionalities which are variously provided by processor elements 500, 510, 520.

As shown in FIG. 5A, processor element 500 has an architecture such as that of a cell in any of various suitable recurrent neural networks. Processor element 500 is coupled to receive - at a given processing cycle *t* - an input value **x***ₜ*, a cell output **h**_{*t*-1} (generated in a preceding processing cycle), and a bias signal *b.* Based on said inputs, processor element 500 generates a cell output **h***ₜ* for the processing cycle *t* - e.g., according to equation (1) below: ${h}_{t} = tanh \left(W⋅{x}_{t}+U⋅{x}_{t - 1}+b\right)$ (1)

Referring now to FIG. 5B, processor element 510 has an architecture such as that of a cell in any of various suitable long short-term memory (LSTM) neural networks. Processor element 510 is coupled to receive - at a processing cycle *t* - an input value **x***ₜ*, a previous cell output **h**_{*t*-1}, and various bias signals *b_{f}, bᵢ, bₒ* (which, for simplicity, are not shown). Processor element 510 is further coupled to receive a value *C*_{*t*-1} indicating a cell state which was generated at a preceding processing cycle (*t*-1).

Based on said inputs, processor element 510 generates a cell output **h***ₜ* and a cell state value **C***ₜ* for the processing cycle *t.* More particularly, processor element 510 generates various the intermediate signal (*fₜ*) 512, signal (*iₜ*) 514, signal (Ĉ*ₜ*) 516, and signal (*oₜ*) 518 - according to equations (2)-(5) below: ${f}_{t} = σ \left({W}_{f}⋅{x}_{t}+{U}_{f}⋅{h}_{t - 1}+{b}_{f}\right)$ (2) ${i}_{t} = σ \left({W}_{i}⋅{x}_{t}+{U}_{i}⋅{h}_{t - 1}+{b}_{i}\right)$ (3) $\hat{C} = tanh \left({W}_{c}⋅{x}_{t}+{U}_{c}⋅{h}_{t - 1}+{b}_{c}\right)$ (4) ${o}_{t} = σ \left({W}_{o}⋅{x}_{t}+{U}_{o}⋅{h}_{t - 1}+{b}_{o}\right)$ (5) Based on such intermediate signals, processor element 510 further generates **h***ₜ* and **C***ₜ* - e.g., according to equations (6) and (7) below: ${h}_{t} = {o}_{t} ⊙ tanh \left({C}_{t - 1}\right)$ (6) ${C}_{t} = {f}_{t} ⊙ {C}_{t - 1} + {i}_{t} ⊙ {\hat{C}}_{t}$ (7)

Referring now to FIG. 5C, processor element 520 has an architecture such as that of a cell in any of various suitable gated recurrent unit (GRU) neural networks. Similar to processor elements 500, 510, processor element 520 is coupled to receive an input value **x***ₜ*, a previous cell output **h**_{*t*-1}, and various bias signals *bᵣ, b_{z}, bₕ* (not shown). Based on said inputs, processor element 520 generates a cell output **h***ₜ* for the current cycle *t.* More particularly, a reset circuit 530 and an update circuit 540 of processor element 520 generate respective intermediate signals (*rt*) 532, (*zₜ*) 542 - e.g., according to equations (8) and (9) below: ${r}_{t} = σ \left({W}_{r}⋅{x}_{t}+{U}_{r}⋅{h}_{t - 1}+{b}_{r}\right)$ (8) ${z}_{t} = σ \left({W}_{z}⋅{x}_{t}+{U}_{z}⋅{h}_{t - 1}+{b}_{z}\right)$ (9)

Processor element 500 is further configured to generate another intermediate signal (**ĥ**) 550 based on signals 532, 542 - e.g., according to equation (10) below: ${\hat{h}}_{t} = tanh \left({W}_{h}⋅{x}_{t}+{U}_{h}⋅\left({r}_{t}⊙{h}_{t - 1}\right)+{b}_{h}\right)$ (10) Based on such intermediate signals, processor element 520 further generates a cell output **h***ₜ* - e.g., according to equation (11) below: ${h}_{t} = \left(1-{z}_{t}\right) ⊙ {h}_{t - 1} + {z}_{t} ⊙ {\hat{h}}_{t}$ (11) In various embodiments, such a value **h***ₜ* - e.g., as generated by any of processor elements 500, 510, 520 - is provided to calculate or otherwise determine a reuse likelihood value.

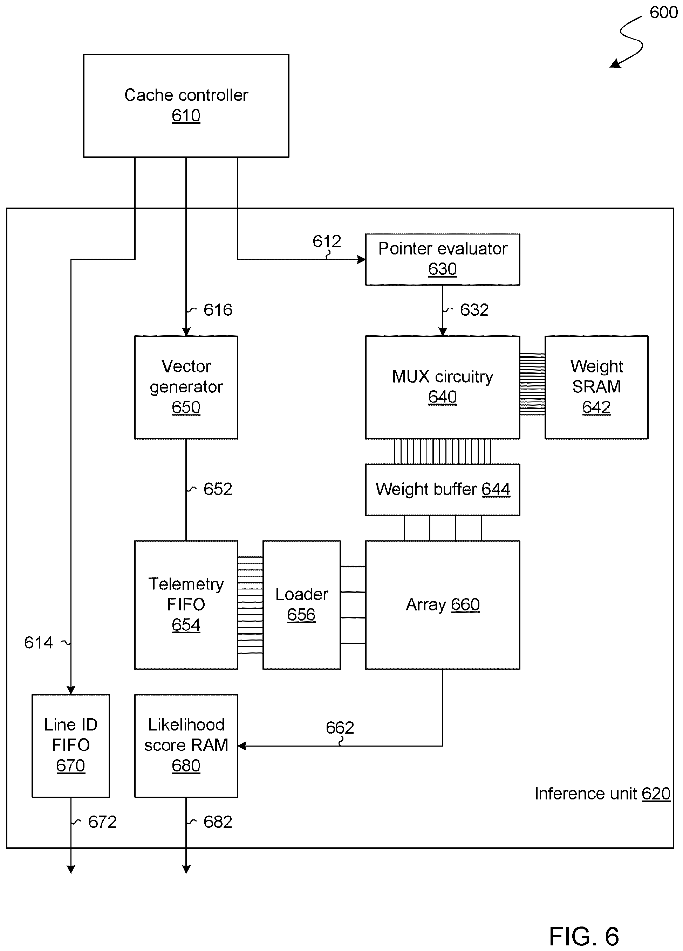

FIG. 6 shows a device 600 which controls a cache based on a reuse likelihood value according to an embodiment. Device 600 illustrates features of one example embodiment which identifies a (re)use prediction value as corresponding to a particular cache line, wherein the value is provided as a basis for determining a utilization of a cache. In some embodiments, device 600 provides functionality such as that of processor 105 or device 300 - e.g., wherein operations of method 200 are performed with circuitry of device 600.

In some embodiments, circuitry of device 600 is adapted from, and/or is incorporated with, any of various suitable processor architectures. By way of illustration and not limitation, any of various suitable embodiments of device 600 are implemented, for example, in the processor 870 (FIG. 8), the processor/coprocessor 880 (FIG. 8), the processor 900 (FIG. 9), the pipeline 1000 (FIG. 10A), the core 1090 (FIG. 10B), and/or the register architecture 1200 (FIG. 12).

As shown in FIG. 6, device 600 comprises an inference unit 620 and, in some embodiments, a cache controller 610 which is coupled thereto - e.g., wherein cache controller 610 and inference unit 620 correspond functionally to cache controller 130 and inference unit 150 (or, for example, to cache controller 310 and inference unit 320), respectively. In various embodiments, device 600 alternatively omits cache controller 610 - e.g., wherein device 600 comprises only some or all circuitry of inference unit 620. Alternatively or in addition, device 600 further comprises circuitry such as that of evaluation unit 350 (or evaluation unit 154, for example), in some embodiments.

In the example embodiment shown, inference unit 620 comprises a systolic array 660, a vector generator 650, and a weight SRAM 642 which, for example, provide functionality such as that of systolic array 340, encoder 324, and repository 326 (respectively). Furthermore, inference unit 620 comprises a pointer evaluator 630, multiplexer (MUX) circuitry 640, and a loader 656, some or all of which provide functionality such as that of analytics control circuitry 330 (for example). Further still, inference unit 620 comprises a weight buffer 644, a line identifier (ID) FIFO 670 and a telemetry first-in-first-out buffer (FIFO) 654 (such as telemetry buffer(s) 322).

In an embodiment, vector generator 650 is coupled to receive from cache controller 610 a signal 616 which, at a given time during operation of device 600, includes telemetry information for a given cache line. In various embodiments, vector generator 650 additionally or alternatively receives similar telemetry information from one or more other sources (e.g., including performance monitor unit 140, sensor(s) 142 and/or the like). Vector generator 650 comprises circuitry which is configured to encode (e.g., reformat) or otherwise prepare information in telemetry signal 616 to be evaluated or otherwise operated on with array 660. For example, based on telemetry signal 616, vector generator 650 generates a vector 652 which corresponds to the given cache line, wherein one or more values of vector 652 specify or otherwise indicate one or more characteristics of access to the corresponding cache line. In an embodiment, vector generator 650 stores vector 652 to telemetry FIFO 654 in preparation for a subsequent loading into array 660.

In one such embodiment, pointer evaluator 630 is coupled to receive from cache controller 610 a timing signal 612 with which a pointer evaluator 630 (or other suitable circuitry of inference unit 620) synchronizes or otherwise manages a successive - e.g., time multiplexed - calculation of use likelihood values which each correspond to a respective cache line. Pointer evaluator 630 is configured to generate, based on timing signal 612, a selector signal 632 which, at a given time during operation of device 600, provides a pointer to, or other indication of, a particular set of weights that are stored in weight SRAM 642. For example, based on timing signal 612, pointer evaluator 630 cycles selector signal 632 through a sequence of values which each indicate a different respective multiplexing state of MUX circuitry 640. MUX circuitry 640 is coupled to variously provide successive sets of weights - from weight SRAM 642 to a weight buffer 644 of inference unit 620 - based on selector signal 632.

In an illustrative scenario according to one embodiment, loader 656 is operable to debuffer a telemetry vector, for a given cache line, from telemetry FIFO 654 to array 660 - e.g., where such debuffering is in coordination with a loading of corresponding weight values from weight buffer 644 to array 660. Based on said telemetry vector and corresponding weights, array 660 generates an output 662 comprising a reuse likelihood value which has been calculated for the corresponding cache line. By way of illustration and not limitation, array 660 has one or more features of systolic array 400 - e.g., wherein device 600 comprises one of processor elements 500, 510, 520.

In various embodiments, output 662 is provide to a likelihood score RAM 680 (or other suitable repository of device 600) which facilitates communication of the reuse likelihood value - e.g., to evaluation unit 154, evaluation unit 350 or other such resource - in association with a corresponding cache line. In the example embodiment shown, line ID FIFO 670 is coupled to receive from cache controller 610 a line number 614 or other suitable indication of a particular cache line to which telemetry signal 616 corresponds. For example, likelihood score RAM 680 provides a reuse likelihood score 682 in combination with a signal 672, from line ID FIFO 670, which specifies or otherwise indicates the cache line to which score 682 corresponds. In one example embodiment, signal 672 and/or score 682 are communicated as prediction information 342 (for example).

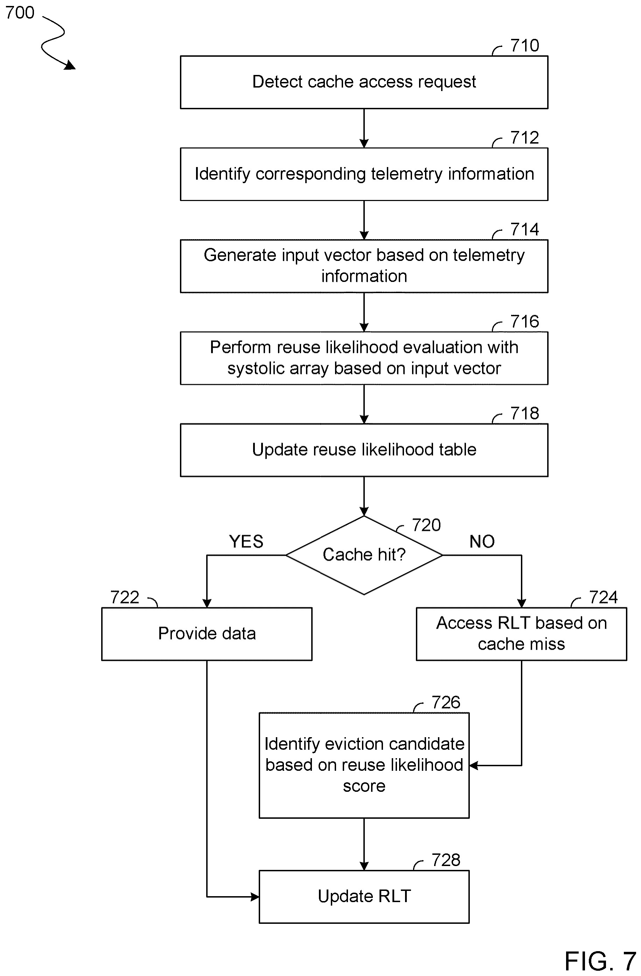

FIG. 7 shows a method 700 for determining an operation of a cache controller with a ML engine according to an embodiment. Operations such as those of method 700 are performed with any of various combinations of suitable hardware (e.g., circuitry), firmware and/or executing software which, for example, provide some or all of the functionality of processor 105, device 300, or systolic array 400 - e.g., wherein method 700 comprises features of method 200.

As shown in FIG. 7, method 700 comprises (at 710) detecting a request to access a cache such as one which is controlled by cache controller 130 or cache controller 310. Method 700 further comprises (at 712) identifying telemetry information which corresponds to the request detected at 710. For example, such telemetry information describes a characteristic of one or more accesses to a cache line which is a target of the request.

Based on the telemetry information which is identified at 712, method 700 (at 714) generates an input vector that is to be provided to an inference engine. Based on the input vector which is generated at 714, method 700 (at 716) performs a reuse likelihood evaluation with a systolic array (e.g., systolic array 340) or other suitable ML engine circuitry.

Method 700 further comprises (at 718) updating a RLT with a reuse likelihood score that is generated at 716. In one example embodiment, the updating at 718 comprises storing the reuse likelihood score to an entry of the RLT, wherein the entry includes (or is otherwise associated with) a tag, address or other identifier of the corresponding cache line.

Method 700 further comprises performing an evaluation (at 720) to determine whether a cache access request, such as the one detected at 710, has resulted in a cache hit. Where a cache miss is detected at 720, method 700 accesses the RLT (at 724) and, based on said access, identifies an eviction candidate (at 726) based on one or more reuse likelihood scores stored at the RLT. For example, identifying the eviction candidate at 726 comprises identifying one or more cache lines that are to be evicted each based on a respective (relatively low) reuse likelihood score - e.g., to accommodate said one or more cache lines being replaced according to a predictive least likely to be used replacement policy. Method 700 further comprises (at 728) updating the RLT based, for example, on the eviction candidate identified at 726. By way of illustration and not limitation, the updating at 728 is to replace a table entry for an evited cache line with an alternative table entry which is to be for a corresponding replacement cache line.

Where a cache hit is instead detected at 720, method 700 (at 722) provides the cached data which is targeted by said cache hit. Furthermore, method 700 (at 728) updates the RLT based, for example, on the detected cache hit. By way of illustration and not limitation, the updating at 728 is to provide an updated reuse likelihood score for the cache line which is the target of the detected cache hit.

Detailed below are describes of exemplary computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 8 illustrates an exemplary system. Multiprocessor system 800 is a point-to-point interconnect system and includes a plurality of processors including a first processor 870 and a second processor 880 coupled via a point-to-point interconnect 850. In some examples, the first processor 870 and the second processor 880 are homogeneous. In some examples, first processor 870 and the second processor 880 are heterogenous. Though the exemplary system 800 is shown to have two processors, the system may have three or more processors, or may be a single processor system.

Processors 870 and 880 are shown including integrated memory controller (IMC) circuitry 872 and 882, respectively. Processor 870 also includes as part of its interconnect controller point-to-point (P-P) interfaces 876 and 878; similarly, second processor 880 includes P-P interfaces 886 and 888. Processors 870, 880 may exchange information via the point-to-point (P-P) interconnect 850 using P-P interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a chipset 890 via individual P-P interconnects 852, 854 using point to point interface circuits 876, 894, 886, 898. Chipset 890 may optionally exchange information with a coprocessor 838 via an interface 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via P-P interconnect, such that either or both processors' local cache information may be stored in the shared cache if a processor is placed into a low power mode.

Chipset 890 may be coupled to a first interconnect 816 via an interface 896. In some examples, first interconnect 816 may be a Peripheral Component Interconnect (PCI) interconnect, or an interconnect such as a PCI Express interconnect or another I/O interconnect. In some examples, one of the interconnects couples to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interconnect 816, along with a bus bridge 818 which couples first interconnect 816 to a second interconnect 820. In some examples, one or more additional processor(s) 815, such as coprocessors, high-throughput many integrated core (MIC) processors, GPGPUs, accelerators (such as graphics accelerators or digital signal processing (DSP) units), field programmable gate arrays (FPGAs), or any other processor, are coupled to first interconnect 816. In some examples, second interconnect 820 may be a low pin count (LPC) interconnect. Various devices may be coupled to second interconnect 820 including, for example, a keyboard and/or mouse 822, communication devices 827 and a storage circuitry 828. Storage circuitry 828 may be one or more non-transitory machine-readable storage media as described below, such as a disk drive or other mass storage device which may include instructions/code and data 830 in some examples. Further, an audio I/O 824 may be coupled to second interconnect 820. Note that other architectures than the point-to-point architecture described above are possible. For example, instead of the point-to-point architecture, a system such as multiprocessor system 800 may implement a multi-drop interconnect or other such architecture.

### Exemplary Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may include on the same die as the described CPU (sometimes referred to as the application core(s) or application processor(s)), the above described coprocessor, and additional functionality. Exemplary core architectures are described next, followed by descriptions of exemplary processors and computer architectures.

FIG. 9 illustrates a block diagram of an example processor 900 that may have more than one core and an integrated memory controller. The solid lined boxes illustrate a processor 900 with a single core 902A, a system agent unit circuitry 910, a set of one or more interconnect controller unit(s) circuitry 916, while the optional addition of the dashed lined boxes illustrates an alternative processor 900 with multiple cores 902A-N, a set of one or more integrated memory controller unit(s) circuitry 914 in the system agent unit circuitry 910, and special purpose logic 908, as well as a set of one or more interconnect controller units circuitry 916. Note that the processor 900 may be one of the processors 870 or 880, or co-processor 838 or 815 of FIG. 8.

Thus, different implementations of the processor 900 may include: 1) a CPU with the special purpose logic 908 being integrated graphics and/or scientific (throughput) logic (which may include one or more cores, not shown), and the cores 902A-N being one or more general purpose cores (e.g., general purpose in-order cores, general purpose out-of-order cores, or a combination of the two); 2) a coprocessor with the cores 902A-N being a large number of special purpose cores intended primarily for graphics and/or scientific (throughput); and 3) a coprocessor with the cores 902A-N being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904A-N within the cores 902A-N, a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples ring-based interconnect network circuitry 912 interconnects the special purpose logic 908 (e.g., integrated graphics logic), the set of shared cache unit(s) circuitry 906, and the system agent unit circuitry 910, alternative examples use any number of well-known techniques for interconnecting such units. In some examples, coherency is maintained between one or more of the shared cache unit(s) circuitry 906 and cores 902A-N.

In some examples, one or more of the cores 902A-N are capable of multi-threading. The system agent unit circuitry 910 includes those components coordinating and operating cores 902A-N. The system agent unit circuitry 910 may include, for example, power control unit (PCU) circuitry and/or display unit circuitry (not shown). The PCU may be or may include logic and components needed for regulating the power state of the cores 902A-N and/or the special purpose logic 908 (e.g., integrated graphics logic). The display unit circuitry is for driving one or more externally connected displays.

The cores 902A-N may be homogenous in terms of instruction set architecture (ISA). Alternatively, the cores 902A-N may be heterogeneous in terms of ISA; that is, a subset of the cores 902A-N may be capable of executing an ISA, while other cores may be capable of executing only a subset of that ISA or another ISA.

### Exemplary Core Architectures -In-order and out-of-order core block diagram.

FIG. 10A is a block diagram illustrating both an exemplary in-order pipeline and an exemplary register renaming, out-of-order issue/execution pipeline according to examples. FIG. 10B is a block diagram illustrating both an exemplary example of an in-order architecture core and an exemplary register renaming, out-of-order issue/execution architecture core to be included in a processor according to examples. The solid lined boxes in FIGS. 10A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 10A, a processor pipeline 1000 includes a fetch stage 1002, an optional length decoding stage 1004, a decode stage 1006, an optional allocation (Alloc) stage 1008, an optional renaming stage 1010, a schedule (also known as a dispatch or issue) stage 1012, an optional register read/memory read stage 1014, an execute stage 1016, a write back/memory write stage 1018, an optional exception handling stage 1022, and an optional commit stage 1024. One or more operations can be performed in each of these processor pipeline stages. For example, during the fetch stage 1002, one or more instructions are fetched from instruction memory, and during the decode stage 1006, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1006 and the register read/memory read stage 1014 may be combined into one pipeline stage. In one example, during the execute stage 1016, the decoded instructions may be executed, LSU address/data pipelining to an Advanced Microcontroller Bus (AMB) interface may be performed, multiply and add operations may be performed, arithmetic operations with branch results may be performed, etc.

By way of example, the exemplary register renaming, out-of-order issue/execution architecture core of FIG. 10B may implement the pipeline 1000 as follows: 1) the instruction fetch circuitry 1038 performs the fetch and length decoding stages 1002 and 1004; 2) the decode circuitry 1040 performs the decode stage 1006; 3) the rename/allocator unit circuitry 1052 performs the allocation stage 1008 and renaming stage 1010; 4) the scheduler(s) circuitry 1056 performs the schedule stage 1012; 5) the physical register file(s) circuitry 1058 and the memory unit circuitry 1070 perform the register read/memory read stage 1014; the execution cluster(s) 1060 perform the execute stage 1016; 6) the memory unit circuitry 1070 and the physical register file(s) circuitry 1058 perform the write back/memory write stage 1018; 7) various circuitry may be involved in the exception handling stage 1022; and 8) the retirement unit circuitry 1054 and the physical register file(s) circuitry 1058 perform the commit stage 1024.

FIG. 10B shows a processor core 1090 including front-end unit circuitry 1030 coupled to an execution engine unit circuitry 1050, and both are coupled to a memory unit circuitry 1070. The core 1090 may be a reduced instruction set architecture computing (RISC) core, a complex instruction set architecture computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front end unit circuitry 1030 may include branch prediction circuitry 1032 coupled to an instruction cache circuitry 1034, which is coupled to an instruction translation lookaside buffer (TLB) 1036, which is coupled to instruction fetch circuitry 1038, which is coupled to decode circuitry 1040. In one example, the instruction cache circuitry 1034 is included in the memory unit circuitry 1070 rather than the front-end circuitry 1030. The decode circuitry 1040 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1040 may further include an address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1040 may be implemented using various different mechanisms. Examples of suitable mechanisms include, but are not limited to, look-up tables, hardware implementations, programmable logic arrays (PLAs), microcode read only memories (ROMs), etc. In one example, the core 1090 includes a microcode ROM (not shown) or other medium that stores microcode for certain macroinstructions (e.g., in decode circuitry 1040 or otherwise within the front end circuitry 1030). In one example, the decode circuitry 1040 includes a micro-operation (micro-op) or operation cache (not shown) to hold/cache decoded operations, micro-tags, or micro-operations generated during the decode or other stages of the processor pipeline 1000. The decode circuitry 1040 may be coupled to rename/allocator unit circuitry 1052 in the execution engine circuitry 1050.

The execution engine circuitry 1050 includes the rename/allocator unit circuitry 1052 coupled to a retirement unit circuitry 1054 and a set of one or more scheduler(s) circuitry 1056. The scheduler(s) circuitry 1056 represents any number of different schedulers, including reservations stations, central instruction window, etc. In some examples, the scheduler(s) circuitry 1056 can include arithmetic logic unit (ALU) scheduler/scheduling circuitry, ALU queues, arithmetic generation unit (AGU) scheduler/scheduling circuitry, AGU queues, etc. The scheduler(s) circuitry 1056 is coupled to the physical register file(s) circuitry 1058. Each of the physical register file(s) circuitry 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1058 includes vector registers unit circuitry, writemask registers unit circuitry, and scalar register unit circuitry. These register units may provide architectural vector registers, vector mask registers, general-purpose registers, etc. The physical register file(s) circuitry 1058 is coupled to the retirement unit circuitry 1054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1054 and the physical register file(s) circuitry 1058 are coupled to the execution cluster(s) 1060. The execution cluster(s) 1060 includes a set of one or more execution unit(s) circuitry 1062 and a set of one or more memory access circuitry 1064. The execution unit(s) circuitry 1062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1056, physical register file(s) circuitry 1058, and execution cluster(s) 1060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1064). It should also be understood that where separate pipelines are used, one or more of these pipelines may be out-of-order issue/execution and the rest in-order.

In some examples, the execution engine unit circuitry 1050 may perform load store unit (LSU) address/data pipelining to an Advanced Microcontroller Bus (AMB) interface (not shown), and address phase and writeback, data phase load, store, and branches.

The set of memory access circuitry 1064 is coupled to the memory unit circuitry 1070, which includes data TLB circuitry 1072 coupled to a data cache circuitry 1074 coupled to a level 2 (L2) cache circuitry 1076. In one exemplary example, the memory access circuitry 1064 may include a load unit circuitry, a store address unit circuit, and a store data unit circuitry, each of which is coupled to the data TLB circuitry 1072 in the memory unit circuitry 1070. The instruction cache circuitry 1034 is further coupled to the level 2 (L2) cache circuitry 1076 in the memory unit circuitry 1070. In one example, the instruction cache 1034 and the data cache 1074 are combined into a single instruction and data cache (not shown) in L2 cache circuitry 1076, a level 3 (L3) cache circuitry (not shown), and/or main memory. The L2 cache circuitry 1076 is coupled to one or more other levels of cache and eventually to a main memory.

The core 1090 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1090 includes logic to support a packed data instruction set architecture extension (e.g., AVX1, AVX2), thereby allowing the operations used by many multimedia applications to be performed using packed data.

### Exemplary Execution Unit(s) Circuitry.

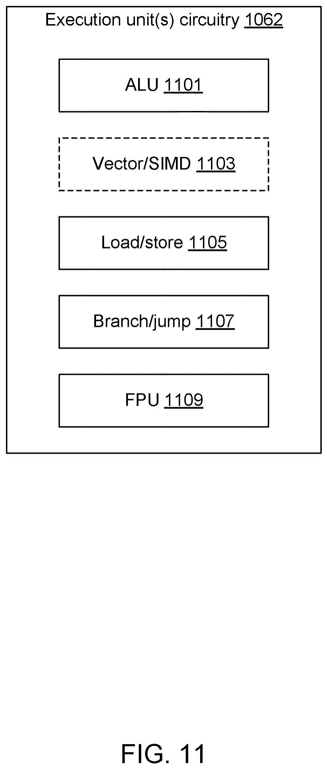

FIG. 11 illustrates examples of execution unit(s) circuitry, such as execution unit(s) circuitry 1062 of FIG. 10B. As illustrated, execution unit(s) circuity 1062 may include one or more ALU circuits 1101, optional vector/single instruction multiple data (SIMD) circuits 1103, load/store circuits 1105, branch/jump circuits 1107, and/or Floating-point unit (FPU) circuits 1109. ALU circuits 1101 perform integer arithmetic and/or Boolean operations. Vector/SIMD circuits 1103 perform vector/SIMD operations on packed data (such as SIMD/vector registers). Load/store circuits 1105 execute load and store instructions to load data from memory into registers or store from registers to memory. Load/store circuits 1105 may also generate addresses. Branch/jump circuits 1107 cause a branch or jump to a memory address depending on the instruction. FPU circuits 1109 perform floating-point arithmetic. The width of the execution unit(s) circuitry 1062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Exemplary Register Architecture

FIG. 12 is a block diagram of a register architecture 1200 according to some examples. As illustrated, the register architecture 1200 includes vector/SIMD registers 1210 that vary from 128-bit to 1,024 bits width. In some examples, the vector/SIMD registers 1210 are physically 512-bits and, depending upon the mapping, only some of the lower bits are used. For example, in some examples, the vector/SIMD registers 1210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1200 includes writemask/predicate registers 1215. For example, in some examples, there are 8 writemask/predicate registers (sometimes called k0 through k7) that are each 16-bit, 32-bit, 64-bit, or 128-bit in size. Writemask/predicate registers 1215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1215 corresponds to a data element position of the destination. In other examples, the writemask/predicate registers 1215 are scalable and consists of a set number of enable bits for a given vector element (e.g., 8 enable bits per 64-bit vector element).

The register architecture 1200 includes a plurality of general-purpose registers 1225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1200 includes scalar floating-point (FP) register 1245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1240 (e.g., EFLAGS, RFLAGS, etc.) store status and control information for arithmetic, compare, and system operations. For example, the one or more flag registers 1240 may store condition code information such as carry, parity, auxiliary carry, zero, sign, and overflow. In some examples, the one or more flag registers 1240 are called program status and control registers.

Segment registers 1220 contain segment points for use in accessing memory. In some examples, these registers are referenced by the names CS, DS, SS, ES, FS, and GS.

Machine specific registers (MSRs) 1235 control and report on processor performance. Most MSRs 1235 handle system-related functions and are not accessible to an application program. Machine check registers 1260 consist of control, status, and error reporting MSRs that are used to detect and report on hardware errors.

One or more instruction pointer register(s) 1230 store an instruction pointer value. Control register(s) 1255 (e.g., CR0-CR4) determine the operating mode of a processor (e.g., processor 870, 880, 838, 815, and/or 900) and the characteristics of a currently executing task. Debug registers 1250 control and allow for the monitoring of a processor or core's debugging operations.

Memory (mem) management registers 1265 specify the locations of data structures used in protected mode memory management. These registers may include a GDTR, IDRT, task register, and a LDTR register.

Alternative examples may use wider or narrower registers. Additionally, alternative examples may use more, less, or different register files and registers. The register architecture 1200 may, for example, be used in or physical register file(s) circuitry 1058.

Techniques and architectures for providing access to a resource of a cache are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

In one or more first embodiments, a device comprises first circuitry comprising a systolic array, the first circuitry to receive first telemetry information which indicates a use of one or more caches comprising a first cache line, determine a vector of first values based on the first telemetry information, generate, with the systolic array, a first reuse likelihood score which corresponds to the first cache line, wherein processor elements of the systolic array are each to perform a respective fixed-point calculation based on the first values and weight values which correspond to the first cache line, second circuitry coupled to the first circuitry, the second circuitry to identify a cache utilization action based on the first reuse likelihood score, communicate the cache utilization action to a cache controller circuit.

In one or more second embodiments, further to the first embodiment, the first circuitry to generate the first reuse likelihood score with the systolic array comprises the first circuitry to successively generate multiple reuse likelihood scores each based on respective telemetry information, the second circuitry is further to maintain a table which is to identify multiple reuse likelihood scores each as corresponding to a different respective cache line, comprising the second circuitry to store to an entry of the table the first reuse likelihood score and an identifier of the first cache line.

In one or more third embodiments, further to the second embodiment, the second circuitry is further to perform a search of the table, the second circuitry is to identify the cache utilization action based on the search.

In one or more fourth embodiments, further to the first, second, or fourth embodiment, the second circuitry to communicate the cache utilization action comprises the second circuitry to identify to the cache controller circuit one of an allocation of one or more cache lines or a deallocation of the one or more cache lines.

In one or more fifth embodiments, further to any of the first, second, or fourth embodiments, the second circuitry to communicate the cache utilization action comprises the second circuitry to identify to the cache controller circuit one or more cache lines each as a respective candidate to be evicted from the one or more caches.

In one or more sixth embodiments, further to the fifth embodiment, the second circuitry is to identify one or more cache lines based on a predictive least likely to be used eviction policy.

In one or more seventh embodiments, further to any of the first, second, or fourth embodiments, the second circuitry to communicate the cache utilization action comprises the second circuitry to identify one or more lines each as a respective candidate to be prefetched to the one or more caches.

In one or more eighth embodiments, further to any of the first, second, or fourth embodiments, the processor elements of the systolic array comprise recurrent neural network cells.

In one or more ninth embodiments, further to the eighth embodiment, the processor elements of the systolic array comprise long short-term memory cells.

In one or more tenth embodiments, further to the eighth embodiment, the processor elements of the systolic array comprise gated recurrent unit cells.

In one or more eleventh embodiments, a method at a processor comprises receiving first telemetry information which indicates a use of one or more caches comprising a first cache line, determining a vector of first values based on the first telemetry information, generating, with a systolic array of the processor, a first reuse likelihood score which corresponds to the first cache line, wherein processor elements of the systolic array are each to perform a respective fixed-point calculation based on the first values and weight values which correspond to the first cache line, identifying a cache utilization action based on the first reuse likelihood score, communicating the cache utilization action to a cache controller circuit.

In one or more twelfth embodiments, further to the eleventh embodiment, generating the first reuse likelihood score with the systolic array comprises successively generating multiple reuse likelihood scores each based on respective telemetry information, the method further comprises maintaining a table which identifies multiple reuse likelihood scores each as corresponding to a different respective cache line, storing to an entry of the table the first reuse likelihood score and an identifier of the first cache line.

In one or more thirteenth embodiments, further to the twelfth embodiment, the method further comprises performing a search of the table, the cache utilization action is identified based on the search.

In one or more fourteenth embodiments, further to the eleventh embodiment or the twelfth embodiment, communicating the cache utilization action comprises identifying to the cache controller circuit one of an allocation of one or more cache lines or a deallocation of the one or more cache lines.

In one or more fifteenth embodiments, further to any of the eleventh, twelfth, or fourteenth embodiments, communicating the cache utilization action comprises identifying to the cache controller circuit one or more cache lines each as a respective candidate to be evicted from the one or more caches.

In one or more sixteenth embodiments, further to the fifteenth embodiment, the one or more cache lines are identified based on a predictive least likely to be used eviction policy.

In one or more seventeenth embodiments, further to any of the eleventh, twelfth, or fourteenth embodiments, communicating the cache utilization action comprises identifying to the cache controller circuit one or more lines each as a respective candidate to be prefetched to the one or more caches.

In one or more eighteenth embodiments, further to any of the eleventh, twelfth, or fourteenth embodiments, the processor elements of the systolic array comprise recurrent neural network cells.

In one or more nineteenth embodiments, further to the eighteenth embodiment, the processor elements of the systolic array comprise long short-term memory cells.

In one or more twentieth embodiments, further to the eighteenth embodiment, the processor elements of the systolic array comprise gated recurrent unit cells.

In one or more twenty-first embodiments, a system comprises a memory to store data, a memory controller, a processor coupled to the memory via the memory controller, the processor comprising one or more caches comprising a first cache line, a cache controller circuit coupled to the one or more caches, first circuitry comprising a systolic array, the first circuitry to receive first telemetry information which indicates a use of the one or more caches, determine a vector of first values based on the first telemetry information, generate, with the systolic array, a first reuse likelihood score which corresponds to the first cache line, wherein processor elements of the systolic array are each to perform a respective fixed-point calculation based on the first values and weight values which correspond to the first cache line, second circuitry coupled to the first circuitry and to the cache controller circuit, the second circuitry to identify a cache utilization action based on the first reuse likelihood score, communicate the cache utilization action to the cache controller circuit.

In one or more twenty-second embodiments, further to the twenty-first embodiment, the first circuitry to generate the first reuse likelihood score with the systolic array comprises the first circuitry to successively generate multiple reuse likelihood scores each based on respective telemetry information, the second circuitry is further to maintain a table which is to identify multiple reuse likelihood scores each as corresponding to a different respective cache line, comprising the second circuitry to store to an entry of the table the first reuse likelihood score and an identifier of the first cache line.

In one or more twenty-third embodiments, further to the twenty-second embodiment, the second circuitry is further to perform a search of the table, the second circuitry is to identify the cache utilization action based on the search.

In one or more twenty-fourth embodiments, further to the twenty-first embodiment or the twenty-second embodiment, the second circuitry to communicate the cache utilization action comprises the second circuitry to identify to the cache controller circuit one of an allocation of one or more cache lines or a deallocation of the one or more cache lines.

In one or more twenty-fifth embodiments, further to any of the twenty-first, twenty-second, or twenty-fourth embodiments, the second circuitry to communicate the cache utilization action comprises the second circuitry to identify to the cache controller circuit one or more cache lines each as a respective candidate to be evicted from the one or more caches.

In one or more twenty-sixth embodiments, further to the twenty-fifth embodiment, the second circuitry is to identify one or more cache lines based on a predictive least likely to be used eviction policy.

In one or more twenty-seventh embodiments, further to any of the twenty-first, twenty-second, or twenty-fourth embodiments, the second circuitry to communicate the cache utilization action comprises the second circuitry to identify one or more lines each as a respective candidate to be prefetched to the one or more caches.

In one or more twenty-eighth embodiments, further to any of the twenty-first, twenty-second, or twenty-fourth embodiments, the processor elements of the systolic array comprise recurrent neural network cells.

In one or more twenty-ninth embodiments, further to the twenty-eighth embodiment, the processor elements of the systolic array comprise long short-term memory cells.

In one or more thirtieth embodiments, further to the twenty-eighth embodiment, the processor elements of the systolic array comprise gated recurrent unit cells.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A device comprising:
first circuitry comprising a systolic array, the first circuitry to:
receive first telemetry information which indicates a use of one or more caches comprising a first cache line;
determine a vector of first values based on the first telemetry information; and
generate, with the systolic array, a first reuse likelihood score which corresponds to the first cache line, wherein processor elements of the systolic array are each to perform a respective fixed-point calculation based on the first values and weight values which correspond to the first cache line; and
second circuitry coupled to the first circuitry, the second circuitry to:
identify a cache utilization action based on the first reuse likelihood score; and
communicate the cache utilization action to a cache controller circuit.

2. The device of claim 1, wherein:
the first circuitry to generate the first reuse likelihood score with the systolic array comprises the first circuitry to successively generate multiple reuse likelihood scores each based on respective telemetry information; and
the second circuitry is further to maintain a table which is to identify multiple reuse likelihood scores each as corresponding to a different respective cache line, comprising the second circuitry to store to an entry of the table the first reuse likelihood score and an identifier of the first cache line.

3. The device of claim 2, wherein:
the second circuitry is further to perform a search of the table; and
the second circuitry is to identify the cache utilization action based on the search.

4. The device of claim 1 or claim 2, wherein the second circuitry to communicate the cache utilization action comprises the second circuitry to identify to the cache controller circuit one of an allocation of one or more cache lines or a deallocation of the one or more cache lines.

5. The device of any of claims 1, 2 or 4, wherein the second circuitry to communicate the cache utilization action comprises the second circuitry to identify to the cache controller circuit one or more cache lines each as a respective candidate to be evicted from the one or more caches.

6. The device of claim 5, wherein the second circuitry is to identify one or more cache lines based on a predictive least likely to be used eviction policy.

7. The device of any of claims 1, 2 or 4, wherein the second circuitry to communicate the cache utilization action comprises the second circuitry to identify one or more lines each as a respective candidate to be prefetched to the one or more caches.

8. The device of any of claims 1, 2 or 4, wherein the processor elements of the systolic array comprise recurrent neural network cells.

9. The device of claim 8, wherein the processor elements of the systolic array comprise long short-term memory cells.

10. The device of claim 8, wherein the processor elements of the systolic array comprise gated recurrent unit cells.

11. A method at a processor, the method comprising:
receiving first telemetry information which indicates a use of one or more caches comprising a first cache line;
determining a vector of first values based on the first telemetry information;
generating, with a systolic array of the processor, a first reuse likelihood score which corresponds to the first cache line, wherein processor elements of the systolic array are each to perform a respective fixed-point calculation based on the first values and weight values which correspond to the first cache line;
identifying a cache utilization action based on the first reuse likelihood score; and
communicating the cache utilization action to a cache controller circuit.

12. The method of claim 11, wherein:
generating the first reuse likelihood score with the systolic array comprises successively generating multiple reuse likelihood scores each based on respective telemetry information; and
the method further comprises maintaining a table which identifies multiple reuse likelihood scores each as corresponding to a different respective cache line, storing to an entry of the table the first reuse likelihood score and an identifier of the first cache line.

13. The method of claim 11 or claim 12, wherein communicating the cache utilization action comprises identifying to the cache controller circuit one of an allocation of one or more cache lines or a deallocation of the one or more cache lines.

14. The method of claim 11 or claim 12, wherein communicating the cache utilization action comprises identifying to the cache controller circuit one or more cache lines each as a respective candidate to be evicted from the one or more caches.

15. The method of claim 11 or claim 12, wherein communicating the cache utilization action comprises identifying to the cache controller circuit one or more lines each as a respective candidate to be prefetched to the one or more caches.
